# EUROPEAN PATENT SPECIFICATION

(11) **EP 0 972 170 B1**
(45) Date of publication and mention of the grant of the patent: **26.05.2004**
(21) Application number: 98911333.7
(22) Date of filing: 20.03.1998
(51) Int. Cl.: G01D 7/10, G01D 21/02, G01N 25/00

(54) **THE CHARACTERISATION OF PHYSICAL AND CHEMICAL PROPERTIES OF A LIQUID AND A DEVICE THEREFOR**
KENNZEICHNUNG VON PHYSIKALISCHEN UND CHEMISCHEN EIGENSCHAFTEN EINER FLÜSSIGKEIT, SOWIE VORRICHTUNG DAFÜR
CARACTERISATION DES PROPRIETES PHYSIQUES ET CHIMIQUES D'UN LIQUIDE ET DISPOSITIF PERMETTANT D'EFFECTUER CETTE CARACTERISATION

(30) Priority: 24.03.1997 SE 9701092
(43) Date of publication of application: 19.01.2000
(73) Proprietor: Sköld, Rolf, 444 41 Stenungsund (SE)
(72) Inventor: Sköld, Rolf, 444 41 Stenungsund (SE)
(74) Representative: Andersson, Rolf
(86) International application number: PCT/SE1998/000500
(87) International publication number: WO 1998/043049

(56) References cited:
- WO-A-92/02824
- GB-A- 2 268 276
- GB-A- 2 300 272
- US-A- 4 122 343
- US-A- 4 810 286

## Description

The present invention relates to a method and a device enabling the access of a large number of measuring points of physical or chemical properties of a liquid as a function of temperature and concentration of a component. The method is well suited for the production of three-dimensional diagrams; e.g. phase diagrams, by the application of computer technology.

The creation of phase diagrams is usually done by storing a large number of liquid chemical mixtures having varying compositions or total concentrations, at different temperatures until phase equilibria have been established, i.e. long enough to allow e.g. phase separations, the formation of solutions or phase transitions, like melting or crystallinity changes, to occur. This involves the expenditure of a substantial work effort and time, not least in view of the fact that the procedure may have to be repeated several times in order to obtain complementary information and each round of tests may take weeks or months. There is hence a great need to simplify the procedure and to shorten the time needed to produce a phase diagram for the description of physical and chemical properties of a liquid.

In the patent literature, WO 92/02 824 describes a method of generating a phase diagram for the conversion of reactor feed in a fluidised bed reactor by measuring concentration of at least two gases in the reaction gas in a region, measuring pressure and temperature in the region, determining concentration of selected remaining gases in said reaction gas and generating a phase diagram indicative whether the reaction gas is suitable for the conversion. US patent 4 810 286 discloses a method to reduce dissolved oxygen and carbon in molten steel by following an idealised trajectory defined by an upper and lower boundary defined by the carbon/oxygen equilibrium curves at atmospheric pressure and at sub-atmospheric pressure, respectively. US patent 4 122 343 relates to a method of generating correlating data from various products of thermal degradation of biological specimens. However, none of these publications discloses any simple and time reducing method of producing a three-dimensional phase diagram with a physical or chemical property as a function of temperature and component concentration.

It has now been found that a considerable saving in time and work can be accomplished by performing measurements in a measuring cell whereby temperature and component concentration are used as the two independent variables. According to the method, several dependent physical and/or chemical properties can be measured simultaneously in the same cell at the same temperature and composition. The independent variables are varied in a predetermined fashion and at all desired measuring points one or several dependent variables are measured.

More specifically, the present invention relates to a method and a device therefore which enables the ready characterisation of the physical and/or chemical properties of a liquid, e.g. in form of a three-dimensional phase diagram. The method is characterised in that
1) at least one dependent physical and/or chemical property of a liquid is measured as a function of temperature and a component concentration as independent variables,
2) the values for the component concentration are determined by calculation, based on data from control programs for the change of component concentration in a computer and the temperatures are determined by calculation from the temperature control programs or by measurements;
3) the value of the component concentration is changed by adding in one step or gradually a predetermined amount of another liquid containing a different component concentration, and a representative number of measurements of the dependent physical or chemical property are performed within the whole selected temperature range within the predetermined change of the component concentration,
4) the procedures above are repeated at desired component concentrations and temperatures in order to obtain a wanted number of values;
5) the values obtained for the dependent properties are combined with the values for the independent properties to measuring points; and
6) the measuring points electronically stored in the computer are co-ordinated and visualised in a three-dimensional diagram.

The measurements are suitably performed in one measuring cell, which is combined with two sets of control equipment, which comprise or are attached to the control programs for the change of temperature and component concentration, and measuring organs for the determination of at least one physical and/or chemical property and optionally at least one measuring organ for the determination of temperature. The visualisation of data can be done e.g. by presenting the measuring points in a three-dimensional diagram or in a hologram.

The component concentration or concentrations, which constitute one of the independent parameters, are determined by computation from data of component addition. Concentrations may e.g. be varied by the addition of a solvent, such as water, whereby a successive dilution is obtained or by the addition of a concentrate of the dissolved or dispersed component for a successive increase of the component concentration. One preferred method, particularly at low concentrations of components, is to take away a certain volume and thereafter add approximately the same volume of the liquid with a different concentration of the components. The advantage of this method of concentration control is that the total volume of liquid can be kept essentially constant. The concentration of components may be changed gradually or in a discrete steps. In the case that the component concentration is changed in discrete steps, measurements of physical and/or chemical properties are performed over the entire desired temperature interval at each component concentration. In the case that components concentration is changed gradually a large number of measurements of the physical and/or chemical properties are performed within a short period of time, in order to obtain a representative number of measurements in the entire desired temperature range and within the predetermined range of the component concentration. The predetermined amount added in one step or gradually may vary within wide limits but normally amounts to 0.01-5 % by weight of the liquid.

During measurements of the physical and/or chemical properties it is preferred to measure the temperature, even if this could be determined from control data. The procedure described above is repeated at such a number of component concentrations and temperatures that an adequate number of measuring points is obtained for the creation of a three-dimensional diagram. The temperature may also be changed either continuously or in a stepwise manner. In order to reduce the number of changes of temperature needed, measurements may be performed both while increasing the temperature and while decreasing the temperature.

Measured and calculated values are stored and compiled into a diagram with three or more variables. This is suitably done in a computer with an I/O interface device for the control of the independent variables, as well as for data collection. A computer is also used for the presentation of data. For a graphical presentation of data, the computer may be connected to a video screen and/or a printer.

The present invention also comprises a device for performing the method. The device is characterised in that it comprises
a) at least one measuring cell provided with
   i) an equipment for the homogenisation of a liquid,
   ii) at least two control equipment, which comprise or are attached to control programs for changing the two independent variables, component concentration and temperature, in a predetermined manner, the control equipment of the component concentration comprising a dosage organ for the addition of another liquid containing a different component concentration,
   iii) at least one measuring organ for the determination of at least one dependent physical and/or chemical property of the liquid, and
   iv) optionally a measuring organ for the determination of the temperature,
b) at least one computer for
   i) the reception and storage of data relating to the dependent and independent variables via at least one electronic circuit and the calculation of at least the component concentration from data obtained from the control program and
   ii) compilation of the received and calculated values into three-dimensional measuring points and
c) equipment for visualisation of the measuring points stored in the computer in a three-dimensional diagram.

The equipment for the control of the temperature of the liquid may comprise a jacket or a tube coil for the heating and/or cooling with a heat transfer medium such as water, polyethylene glycol or silicon oil. Alternatively, heating may be done by an electric heating element. Cooling and heating may be controlled via a computer program or by a constant supply of the heat transfer medium. The equipment for the control of component concentration comprises one or several dosage organs for the withdrawal of the liquid and the injection of another liquid with a different component concentration. Exchanged liquid amounts are controlled by a program in the computer. Dosage data are used to calculate the corresponding component concentration or concentrations for the measuring points.

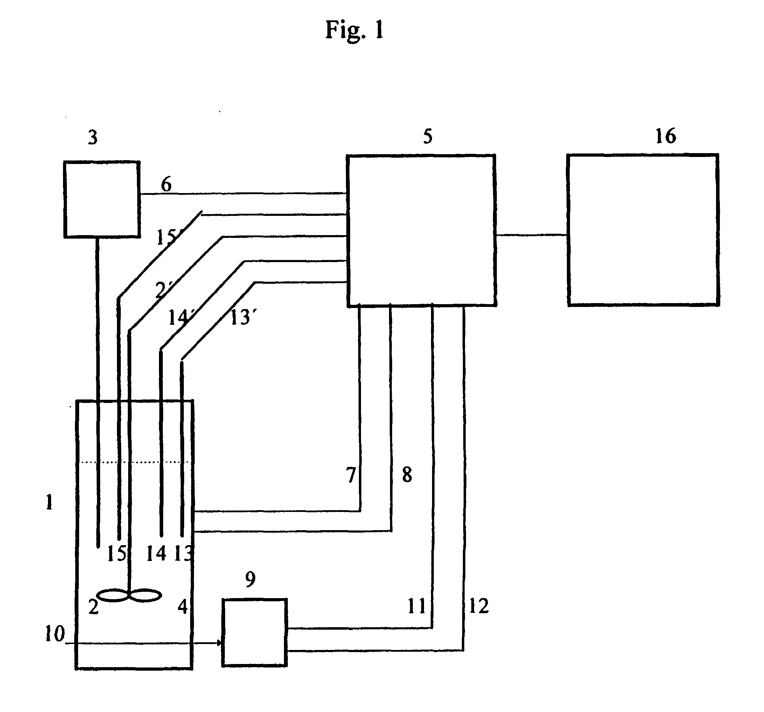

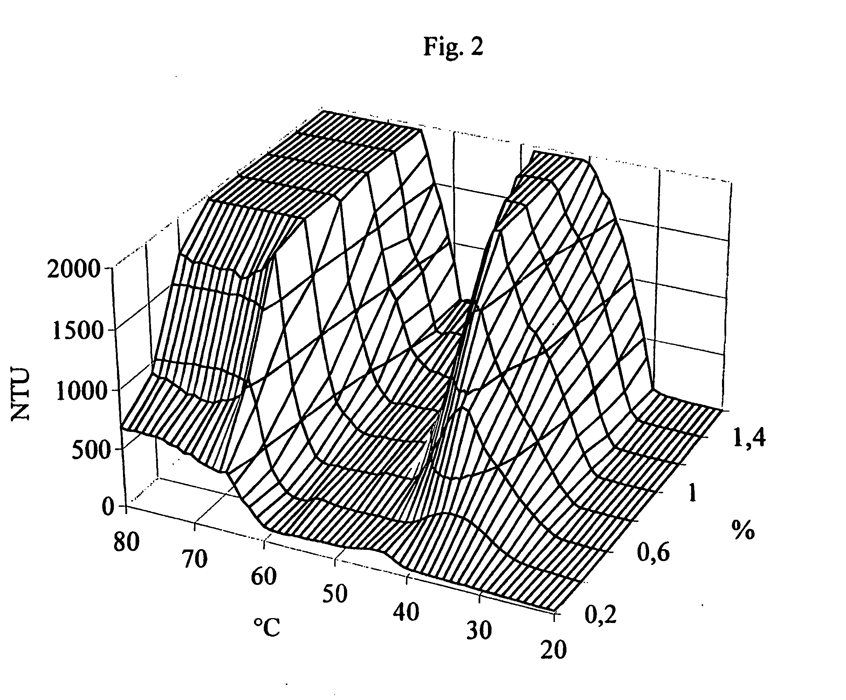

A device for the performance of the method according to the invention is shown schematically in Figure 1. Figure 2 shows a three-dimensional diagram, in which the turbidity (NTU) of an alkyl polyethylene glycol compound in water is visualised as a function of temperature (°C) and concentration (%(w/w)) of the alkyl polyethylene glycol compound.

In Figure 1 is shown a measuring cell 1, which is equipped with a stirrer 2, a motor driven burette 3, which in a predetermined manner controls component concentration in a liquid 4. From a computer 5 with an I/O interface equipment, control signals are sent to the burette 3 via an electronic circuit 6. In addition, control signals for heating and cooling are being sent via circuits 7 and 8. A heat transfer jacket surrounding the measuring cell serves to transfer temperature changes to the liquid. A combined turbidimeter and polarimeter 9 with a common light source 10 measures turbidity and optical activity, respectively. Measured values are transmitted via circuits 11 and 12 to the computer 5 for storage. A conductivity meter 13, a pH meter 14 and a temperature meter 15 measure specific conductivity, pH and temperature, respectively. Measured values are transmitted for storage to the computer 5 via circuits 13', 14' and 15', respectively, while the viscosity of the medium may be measured from the needed electric effect input to keep stirring at a constant speed. The measured value for stirrer effect demand is transmitted to the computer 5 via circuit 2'. Measured and computed values are compiled in the computer 5 to e.g. tables or at least three-dimensional diagrams which are displayed 16 on a video screen or on paper via a printer.

In the three-dimensional diagram in Figure 2 is shown that the turbidity of the present alkyl polyethylene glycol is low at temperatures from ca. 20°C to about 30°C at a concentration of 0.2 - 1.6 percent by weight of the alkyl polyethylene glycol. A substantial cloudiness is appearing in the temperature range between ca. 32 - 40°C and persists up to 80°C, which is the end of the present temperature range, with the exception of a local partial clearing in the temperature range from ca. 54°C to ca 60°C.

By using the method and the device according to the present invention it is possible to measure simultaneously a large number of different physical and/or chemical variables, such as the pH, conductivity and turbidity of fluids as functions of the temperature and the concentration of one component, which may consist of one or several substances. By combining several measuring organs in the measuring cell, it is possible with a minimum expenditure of time and labour to obtain data in a form that allows an overview of the dependent variables over a wide range of temperatures and concentrations. The method and the device are useful e.g. for the rapid investigation of phase equilibria. Thus turbidity offers a good picture of where in the three-dimensional diagram two or more phases coexist in a mixture. When an isotropic solution, e.g. surfactants in water, exists or when a large volume of a phase, e.g. a micellar solution, is in equilibrium with a small volume of a different phase, e.g. a surfactant rich phase, low turbidities are measured. When the volume of the smaller phase increases, e.g. by the addition of a surfactant with a limited solubility in water, an increase in the turbidity will occur and vice versa. Different combinations of data from e.g. turbidity, pH, conductivity, viscosity as well as optical and spectrophotometrical data can offer essential information about changes in the state of aggregation of dissolved species, such as the appearance or disappearance of viscous phases, such as hexagonal liquid crystalline phases or other optically active liquid crystalline phases as a result of changes in the concentration of one or more components in the mixture or a temperature change.

Viscosity can be calculated from measured data of power needed or rotational speed of the electrical motor which may be used to drive the stirring device. Thus, a higher power demand at a constant rate of rotation or a slower rotational speed at a constant power input indicate a higher viscosity as a result of a change in temperature or composition. The appearance or disappearance of optically active phases as a result of a change in temperature or composition can be indicated by measured changes in the amount of light passing through two crossed polarisers positioned on each side of the chemical mixture in a transparent measuring vessel with a light source before the first polariser and a light sensitive detector after the other polariser. A suitable dependent variable that indicates solubility, e.g. light scattering or turbidity, can be used for a simple indication of the presence of dispersed matter.

The method and the device may in principle be used for all types of liquids, such as solutions, semisolid solutions and dispersions, to an extent that depends on which dependent variables are suitable to measure under the prevailing conditions of the liquid.

## Claims

1. A method for the characterisation of physical and/or chemical properties of a liquid,
**characterised in that**,
1) at least one dependent physical and/or chemical property of a liquid is measured as a function of temperature and a component concentration as independent variables,
2) the values for the component concentration are determined by calculation, based on data from control programs for the change of component concentration in a computer and the temperatures are determined by calculation from the temperature control programs or by measurements;
3) the value of the component concentration is changed by adding in one step or gradually a predetermined amount of another liquid containing a different component concentration, and a representative number of measurements of the dependent physical or chemical property are performed within the whole selected temperature range within the predetermined change of the component concentration,
4) the procedures above are repeated at desired component concentrations and temperatures in order to obtain a wanted number of values;
5) the values obtained for the dependent properties are combined with the values for the independent properties to measuring points; and
6) the measuring points electronically stored in the computer are co-ordinated and visualised in a three-dimensional diagram.

2. A method according to Claim 1 , **characterised in that**, a series of measurements are done under rising temperature, and following series of measurements are done under decreasing temperatures and vice versa.

3. A method according to Claims 1 or 2, **characterised in that**, one portion of the liquid is removed and the same volume of the another liquid containing a different concentration of the component is thereafter added.

4. A method according to any of Claims 1-3, **characterised in that**, the changes in concentration and/or the temperature are controlled by a program in the computer.

5. A method according to any of Claims 1-4, **characterised in that**, the temperature of each measuring point is measured simultaneously with the physical and/or chemical property.

6. A method according to any one of Claims 1-5, **characterised in that**, the predetermined amount of the another liquid added to the liquid amends the concentration of the component in the liquid with 0.01-5 % by weight.

7. A device for the characterisation of the physical and/or chemical properties of a liquid, **characterised in that**, it comprises
a) at least one measuring cell (1) provided with
i) an equipment (2) for the homogenisation of a liquid,
ii) at least two control equipment (3, 17), which comprise or are attached to control programs for changing of the two independent variables, component concentration and temperature, in a predetermined manner, the control equipment (3) of the component concentration comprising a dosage organ for the addition of another liquid containing a different component concentration,
iii) at least one measuring organ (9, 13, 14) for the determination of at least one dependent physical and/or chemical property of the liquid, and
iv) optionally a measuring organ (15) for the determination of the temperature,
b) at least one computer (5) for
i) the reception and storage of data relating to the dependent and independent variables via at least one electronic circuit (11', 12', 13', 14', 15') and the calculation of at least the component concentration from data obtained from the control program and
ii) compilation of the received and calculated values into three-dimensional measuring points and
c) equipment (16) for visualisation of the measuring points stored in the computer in a three-dimensional diagram.

8. A device according to Claim 7, **characterised in that**, the equipment for the control of the temperature of the fluid comprises a jacket ( 17) or a heating coil for the cooling and/or heating by means of a heat transfer medium, whereby cooling and heating is controlled by a program in the computer (5).

9. A device according to any of Claims 8 or 9, **characterised in that** the equipment (3) for the control of component concentration comprises one or several dosing organs for the withdrawal and injection of the same amount of the fluid but with a different concentration, whereby amounts are controlled by a program in the computer (5).

10. A device according to Claims 7, 8 or 9, distinguished by the fact that control programs are included in the computer (5).

## Patentansprüche

1. Verfahren zur Charakterisierung von physikalischen und/oder chemischen Eigenschaften einer Flüssigkeit, **dadurch gekennzeichnet, dass**
1) mindestens eine abhängige physikalische und/oder chemische Eigenschaft einer Flüssigkeit als Funktion der Temperatur und einer Komponentenkonzentration als unabhängigen Variablen gemessen wird,
2) die Werte für die Komponentenkonzentration durch Berechnung auf Basis von Daten von Steuerprogrammen für die Änderung der Komponentenkonzentration in einem Computer bestimmt werden und die Temperaturen durch Berechnung von Temperatursteuerprogrammen oder durch Messungen bestimmt werden,
3) der Wert der Komponentenkonzentration durch Zugabe einer vorher festgelegten Menge einer anderen Flüssigkeit, die eine unterschiedliche Komponentenkonzentration enthält, in einem Schritt oder allmählich geändert wird und eine repräsentative Anzahl von Messungen der abhängigen physikalischen oder chemischen Eigenschaft innerhalb des ganzen ausgewählten Temperaturbereichs innerhalb der vorher festgelegten Änderung der Komponentenkonzentration durchgeführt wird,
4) die vorstehenden Prozeduren bei gewünschten Komponentenkonzentrationen und Temperaturen wiederholt werden, um eine gewünschte Anzahl an Werten zu erhalten,
5) die Werte, die für die abhängigen Eigenschaften erhalten werden, mit den Werten für die unabhängigen Eigenschaften zu Messpunkten kombiniert werden und
6) die Messpunkte, die im Computer elektronisch gespeichert werden, koordiniert und in einem dreidimensionalen Diagramm visualisiert werden.

2. Verfahren nach Anspruch 1, **dadurch gekennzeichnet, dass** eine Reihe von Messungen bei steigender Temperatur durchgeführt wird und eine anschließende Reihe von Messungen bei sinkender Temperatur durchgeführt wird und umgekehrt.

3. Verfahren nach den Ansprüchen 1 oder 2, **dadurch gekennzeichnet, dass** ein Teil der Flüssigkeit entfernt wird und das gleiche Volumen der anderen Flüssigkeit mit einer unterschiedlichen Konzentration der Komponente danach zugegeben wird.

4. Verfahren nach irgendeinem der Ansprüche 1 bis 3, **dadurch gekennzeichnet, dass** die Änderungen in der Konzentration und/oder der Temperatur durch ein Programm im Computer gesteuert werden.

5. Verfahren nach irgendeinem der Ansprüche 1 bis 4, **dadurch gekennzeichnet, dass** die Temperatur von jedem Messpunkt gleichzeitig mit der physikalischen und/oder chemischen Eigenschaft gemessen wird.

6. Verfahren nach irgendeinem der Ansprüche 1 bis 5, **dadurch gekennzeichnet, dass** die vorher festgelegte Menge der anderen Flüssigkeit, die zur Flüssigkeit gegeben wird, die Konzentration der Komponente in der Flüssigkeit um 0,01 bis 5 Gew.-% ändert.

7. Vorrichtung zur Charakterisierung von physikalischen und/oder chemischen Eigenschaften einer Flüssigkeit, **dadurch gekennzeichnet, dass** sie umfasst
a) mindestens eine Messzelle (1), die versehen ist mit
i) einer Einrichtung (2) für die Homogenisierung einer Flüssigkeit,
ii) mindestens zwei Regeleinrichtungen (3, 17), die Steuerprogramme zur Änderung der beiden unabhängigen Variablen, der Komponentenkonzentration und der Temperatur, in einer vorher festgelegten Weise umfassen oder damit verbunden sind, wobei die Regeleinrichtung (3) der Komponentenkonzentration ein Dosierungsmittel für die Zugabe einer anderen Flüssigkeit mit einer unterschiedlichen Komponentenkonzentration umfasst,
iii) mindestens einem Messmittel (9, 13, 14) zur Bestimmung von mindestens einer abhängigen physikalischen und/oder chemischen Eigenschaft der Flüssigkeit und
iv) gegebenenfalls einem Messmittel (15) zur Bestimmung der Temperatur,
b) mindestens einen Computer (5) für
i) den Empfang und die Speicherung von Daten, die in Beziehung zu den abhängigen und unabhängigen Variablen stehen, über mindestens einen elektronischen Schaltkreis (11', 12', 13', 14', 15') und die Berechnung von zumindest der Komponentenkonzentration aus Daten, die vom Steuerprogramm erhalten werden, und
ii) die Umwandlung der empfangenen und berechneten Werte in dreidimensionale Messpunkte und
c) eine Einrichtung (16) zur Visualisierung der in dem Computer gespeicherten Messpunkte in einem dreidimensionalen Diagramm.

8. Vorrichtung nach Anspruch 7, **dadurch gekennzeichnet, dass** die Einrichtung für die Temperaturregulierung des Fluids einen Mantel (17) oder eine Heizschlange zum Kühlen und/oder Erwärmen mithilfe eines Wärmeübertragungsmediums umfasst, wodurch das Kühlen und Erwärmen durch ein Programm im Computer (5) gesteuert werden.

9. Vorrichtung nach irgendeinem der Ansprüche 8 oder 9, **dadurch gekennzeichnet, dass** die Einrichtung (3) zur Regulierung der Komponentenkonzentration ein oder mehrere Dosierungsmittel zur Entnahme und Einleitung der gleichen Menge des Fluids, aber mit unterschiedlicher Konzentration, umfasst, wodurch die Mengen durch ein Programm im Computer (5) gesteuert werden.

10. Vorrichtung nach den Ansprüchen 7, 8 oder 9, **gekennzeichnet durch** die Tatsache, dass Steuerprogramme im Computer (5) enthalten sind.

## Revendications

1. Procédé de caractérisation des propriétés physiques et/ou chimiques d'un liquide, **caractérisé en ce que** :
1) on mesure au moins une propriété physique et/ou chimique dépendante d'un liquide en fonction de la température et de la concentration d'un composant en tant que variables indépendantes,
2) on détermine les valeurs de la concentration du composant par calcul, sur la base des résultats des programmes de contrôle de modification de la concentration du composant dans un ordinateur, et on détermine les températures par calcul à partir des programmes de contrôle de température ou par des mesures,
3) on modifie la valeur de la concentration du composant en ajoutant, en une étape ou graduellement, une quantité prédéterminée d'un autre liquide contenant une concentration différente du composant, et on effectue un nombre représentatif de mesures de la propriété physique ou chimique dépendante dans la totalité de l'intervalle de températures sélectionné de modification de la concentration du composant prédéterminée,
4) on répète les modes opératoires ci-dessus aux concentrations en composant et aux températures désirées afin d'obtenir un nombre de valeurs désiré,
5) on combine les valeurs obtenues pour les propriétés dépendantes avec les valeurs des propriétés indépendantes aux points de mesure ; et
6) on coordonne les points de mesure stockés électroniquement dans l'ordinateur et on les visualise dans un diagramme tridimensionnel.

2. Procédé suivant la revendication 1, **caractérisé en ce que** l'on effectue une série de mesures à une température croissante, et on effectue les séries de mesures suivantes à des températures décroissantes, et *vice versa.*

3. Procédé suivant la revendication 1 ou 2, **caractérisé en ce que** l'on prélève une partie du liquide et que le même volume de l'autre liquide contenant une concentration différente en composant est ensuite ajouté.

4. Procédé suivant l'une quelconque des revendications 1-3, **caractérisé en ce que** les modifications de concentration et/ou de température sont contrôlées par un programme de l'ordinateur.

5. Procédé suivant l'une quelconque des revendications 1-4, **caractérisé en ce que** l'on mesure la température de chaque point de mesure simultanément avec la propriété physique et/ou chimique.

6. Procédé suivant l'une quelconque des revendications 1-5, **caractérisé en ce que** la quantité prédéterminée de l'autre liquide ajouté au liquide modifie la concentration du composant dans le liquide de 0,01 à 5 % en poids.

7. Dispositif de caractérisation des propriétés physiques et/ou chimiques d'un liquide, **caractérisé en ce qu'**il comprend :
a) au moins une cellule de mesure (1), équipée de
i) un équipement (2) d'homogénéisation d'un liquide,
ii) au moins deux équipements de contrôle (3, 17) qui comprennent, ou sont reliés à, des programmes de contrôle pour modifier les deux variables indépendantes, la concentration du composant et la température, d'une manière prédéterminée, l'équipement de contrôle (3) de la concentration du composant comprenant un organe de dosage pour l'addition d'un autre liquide contenant une concentration différente en composant,
iii) au moins un organe de mesure (9, 13, 14) pour la détermination d'au moins une propriété physique et/ou chimique dépendante du liquide, et
iv) facultativement, un organe de mesure (15) pour la détermination de la température,
b) au moins un ordinateur (5) pour
i) la réception et le stockage des résultats relatifs aux variables dépendantes et indépendantes par l'intermédiaire d'au moins un circuit électronique (11', 12', 13', 14', 15'), et le calcul d'au moins la concentration du composant à partir des résultats obtenus par le programme de contrôle, et
ii) la compilation des valeurs reçues et calculées en des points de mesure tridimensionnels, et
c) un équipement (16) pour la visualisation des points de mesure stockés dans l'ordinateur sous forme d'un diagramme tridimensionnel.

8. Dispositif suivant la revendication 7, **caractérisé en ce que** l'équipement pour le contrôle de la température du fluide comprend une chemise (17) ou un serpentin de chauffage pour le refroidissement et/ou le chauffage au moyen d'un milieu de transfert thermique, le refroidissement et le chauffage étant ainsi contrôlés par un programme de l'ordinateur (5).

9. Dispositif suivant l'une quelconque des revendications 8 ou 9, **caractérisé en ce que** l'équipement (3) pour le contrôle de la concentration du composant comprend un ou plusieurs organes de dosage pour le prélèvement et l'injection de la même quantité de fluide, mais avec une concentration différente, les quantités étant contrôlées par un programme de l'ordinateur (5).

10. Dispositif suivant la revendication 7, 8 ou 9, qui se distingue par le fait que les programmes de contrôle sont inclus dans l'ordinateur (5).
